Europäisches Patentamt

European Patent Office

Office européen des brevets

(19)

(11) **EP 0 818 667 B1**

(12) # FASCICULE DE BREVET EUROPEEN

(45) Date de publication et mention
de la délivrance du brevet:
**12.09.2001 Bulletin 2001/37**

(51) Int Cl.⁷: **G01B 11/30**

(21) Numéro de dépôt: **97401467.2**

(22) Date de dépôt: **24.06.1997**

(54) **Dispositif pour déterminer la forme de la surface d'onde transmise par une pièce transparente à faces sensiblement parallèles**

Vorrichtung zum Feststellen der Form einer durch eine planparallele Platte transmittierten Wellenfront

Device for determining the form of a wave-front transmitted by a transparent plate with parallel faces

(84) Etats contractants désignés:
**CH DE ES GB IT LI**
Etats d'extension désignés:
**SI**

(30) Priorité: **10.07.1996 FR 9608598**

(43) Date de publication de la demande:
**14.01.1998 Bulletin 1998/03**

(73) Titulaires:
• **COMPAGNIE INDUSTRIELLE DES LASERS CILAS**
**F-91460 Marcoussis (FR)**
• **Le Commissariat à l'Energie Atomique**
**75017 Paris (FR)**

(72) Inventeur: **Bray, Michael**
**Bâtiment Clairbois, 45160 Olivet (FR)**

(74) Mandataire: **Bonnetat, Christian**
**CABINET BONNETAT**
**29, rue de St. Pétersbourg**
**75008 Paris (FR)**

(56) Documents cités:
DE-C- 904 353          US-A- 3 338 130
US-A- 5 337 140          US-A- 5 343 410

• **PATENT ABSTRACTS OF JAPAN vol. 13, no. 580 (P-980) [3928] , 21 décembre 1989 & JP 01 245137 A (HITACHI ELECTRON. ENG. CO. LTD.), 29 septembre 1989,**
• **PATENT ABSTRACTS OF JAPAN vol. 9, no. 79 (P-347) [1802] , 9 avril 1985 & JP 59 211811 A (HITACHI SEISAKUSHO K.K.), 30 novembre 1984,**

## Description

La présente invention concerne un dispositif pour déterminer la forme de la surface d'onde transmise par une pièce transparente à faces sensiblement parallèles.

Plus précisément, on cherche à mesurer la hauteur "d'aspérités" et/ou de "dépressions" infimes, par exemple de l'ordre du nanomètre et plus pour des périodes plus grandes que 0,1 mm environ, sur toute ladite surface sensiblement plane.

Pour ce faire, on utilise le principe connu des mesures interférométriques. Selon ce principe qui est généralement mis en oeuvre pour des mesures par réflexion, on réalise des interférences lumineuses par les réflexions d'un faisceau lumineux de mesure, émis par un interféromètre, respectivement sur la surface de la pièce à mesurer et sur une surface parallèle ou sensiblement parallèle d'une lame de référence. Les interférences ainsi créées se manifestent sous forme de franges d'interférence, susceptibles d'être mesurées par l'interféromètre et représentatives de la distance entre les deux surfaces, aux points considérés.

Aussi, pour pouvoir déterminer précisément la forme de la surface d'onde à partir de telles distances, il est nécessaire que la planéité de la lame de référence soit de l'ordre de grandeur de la pièce à mesurer et que la taille de ladite lame de référence soit au moins égale à celle de ladite surface de la pièce. De plus, le faisceau de mesure doit également présenter un diamètre de taille au moins équivalente.

Les contraintes physiques précitées ne présentent pas trop de difficultés, notamment techniques, tant que la surface de la pièce à mesurer est de dimension réduite.

Toutefois, dès que la surface de la pièce dépasse une ou quelques centaines de millimètres, l'outillage nécessaire à la mesure devient lourd, encombrant, coûteux et difficile à mettre en oeuvre. Ainsi, par exemple pour mesurer une surface de 600 mm de diagonale, on doit utiliser un agrandisseur du faisceau de mesure issu de l'interféromètre de plusieurs mètres de longueur.

Aussi, pour remédier à ces inconvénients, une solution connue et décrite notamment dans un article de Cochran et Creath paru dans la revue "Applied Optics" le 15 mai 1988 sous le titre "Combining multiple-subaperture and two-wavelength techniques to extend the measurement limits of an optical surface profiler", préconise d'utiliser un interféromètre usuel dont le diamètre du faisceau de mesure est réduit et de réaliser des mesures sur une pluralité de zones de mesure recouvrant complètement ladite surface, chacune desdites zones de mesure étant au moins partiellement recouverte sur un secteur de recouvrement par une zone de mesure adjacente.

Les mesures sur lesdits secteurs de recouvrement sont utilisées pour adapter entre elles les mesures réalisées sur les différentes zones de mesure adjacentes, ce qui permet d'assembler ensemble les images desdites zones de mesure de manière à obtenir une image relative à toute la surface de la pièce, indiquant la forme de la surface d'onde réfléchie par la pièce.

De façon connue, un dispositif pour mesurer la forme de la surface d'onde réfléchie par une pièce plane, par la mise en oeuvre de la solution connue précitée, utilisant la mesure de zones de mesure se recouvrant partiellement, comporte de façon usuelle et tel que décrit par exemple dans le brevet US-5 343 410 :

- un support portant la pièce à mesurer ;
- un interféromètre agencé en regard de la surface de réflexion de la pièce, susceptible d'émettre un faisceau lumineux de mesure sur une zone de mesure de ladite surface et de mesurer les franges d'interférence créées par les réflexions dudit faisceau de mesure, respectivement sur ladite surface et sur une lame de référence agencée sensiblement parallèlement à ladite surface sur le trajet dudit faisceau de mesure. Dans le cadre de la présente invention, une pièce sera considérée comme "transparente" lorsqu'elle laissera passer ledit faisceau lumineux de mesure ;
- des moyens de déplacement susceptibles de déplacer, d'une part, ledit support dans une première direction du plan de la pièce et, d'autre part, ledit interféromètre dans une seconde direction du plan de la pièce, orthogonale à ladite première direction de manière à engendrer le balayage dudit faisceau de mesure sur la surface de la pièce afin de permettre audit interféromètre de réaliser des mesures sur une pluralité de zones de mesure recouvrant complètement ladite surface, chacune desdites zones de mesure étant au moins partiellement recouverte sur un secteur de recouvrement par une zone de mesure adjacente ; et
- une unité de commande commandant ledit interféromètre et lesdits moyens de déplacement et déterminant, à partir des mesures effectuées par l'interféromètre sur toutes lesdites zones de mesure, et selon le principe connu précité, la forme de ladite surface d'onde réfléchie par la pièce.

Le dispositif décrit ci-dessus ne permet pas de réaliser des mesures par transmission du faisceau de mesure, comme cela est nécessaire pour certaines pièces transparentes.

De plus, les mesures ne peuvent pas être réalisées automatiquement. En effet, ce dispositif qui est surtout destiné à mesurer des pièces de grande dimension, comme indiqué précédemment, nécessite un support robuste et de dimension adaptée. Il est alors techniquement impossible d'obtenir et/ou de maintenir un parallélisme précis sur toute la surface à quelques micromètres près, entre la lame de référence et la surface à mesurer de la pièce qui est portée par ce support, en raison notamment de l'existence de flexions et/ou de jeux au niveau du support, ainsi qu'au niveau de la fixation de la pièce sur le support.

Cet inconvénient rend nécessaire de régler, avant chaque mesure d'une zone de mesure, le parallélisme entre la lame de référence et la surface de la pièce, entraînant ainsi une mise en oeuvre longue et pénible.

La présente invention a pour objet de remédier à ces inconvénients. Elle concerne un dispositif pour déterminer, de façon rapide et précise, la forme de la surface d'onde transmise par une pièce transparente, à partir de mesures susceptibles d'être réalisées automatiquement.

A cet effet, selon l'invention, le dispositif qui comporte :

- un support portant ladite pièce ;
- un interféromètre agencé en regard d'une surface de la pièce, susceptible d'émettre un faisceau lumineux de mesure sur une zone de mesure de ladite surface et de mesurer les franges d'interférence créées par la surface d'onde du faisceau de mesure transmis par la pièce transparente et la surface d'onde dudit faisceau de mesure réfléchi par une lame de référence agencée sensiblement parallèlement à ladite surface de la pièce sur le trajet dudit faisceau de mesure ;
- des moyens de déplacement permettant d'engendrer par leur action le balayage dudit faisceau de mesure sur la surface de la pièce de manière à permettre audit interféromètre de réaliser des mesures sur une pluralité de zones de mesure recouvrant complètement ladite surface, chacune desdites zones de mesure étant au moins partiellement recouverte sur un secteur de recouvrement par une zone de mesure adjacente ; et
- une unité de commande commandant ledit interféromètre et lesdits moyens de déplacement et déterminant, à partir des mesures effectuées par ledit interféromètre sur toutes les zones de mesure, la forme de ladite surface d'onde transmise par la pièce, les mesures effectuées sur les secteurs de recouvrement étant utilisées pour adapter entre elles les mesures réalisées sur les zones de mesure adjacentes correspondantes,

est remarquable en ce que ledit support est réalisé, au moins sur sa partie portant ladite pièce, de manière à laisser passer le faisceau lumineux de mesure émis par l'interféromètre et transmis par ladite pièce qui est transparente, et en ce que ledit dispositif comporte de plus un premier miroir orientable, agencé du côté opposé à l'interféromètre par rapport au support et à la pièce et disposé sur le trajet du faisceau de mesure émis par l'interféromètre et transmis selon une direction de transmission par la pièce et le support, ledit premier miroir étant agencé approximativement orthogonalement audit faisceau de mesure transmis et étant orienté de manière à renvoyer ledit faisceau de mesure dans ladite direction de transmission.

Ainsi, grâce à l'invention, on est en mesure de réaliser des mesures par transmission, à travers ladite pièce transparente.

De plus, l'agencement conforme à l'invention dudit premier miroir évite de perturber l'équilibre thermique du dispositif lors de manipulations, puisque l'opérateur dudit dispositif n'est pas obligé d'approcher ses mains et son corps de la pièce.

Bien entendu, ledit premier miroir peut être orienté manuellement. Toutefois, de préférence, l'orientation dudit premier miroir est commandée automatiquement par ladite unité de commande.

Dans le cadre de la présente invention, le faisceau de mesure peut être transmis par la pièce et le support selon une direction de transmission, qui est soit orthogonale, soit inclinée par rapport à ces derniers, ce qui permet d'effectuer, selon le mode de réalisation choisi, soit des mesures sous incidence normale, soit des mesures sous incidence non normale.

Par ailleurs, de façon avantageuse, le dispositif conforme à l'invention comporte, de plus, un second miroir orientable et agencé sur le trajet du faisceau de mesure entre l'interféromètre et la pièce de manière à adresser à ladite pièce, par réflexion, le faisceau de mesure émis par ledit interféromètre.

Dans ce cas, dans un premier mode de réalisation avantageux, ledit second miroir est agencé de manière à adresser le faisceau de mesure de façon inclinée par rapport à la surface de la pièce, ce qui permet de réaliser des mesures sous incidence non normale, sans déplacer tout le dispositif.

Dans un second mode de réalisation particulièrement avantageux, ledit second miroir est agencé de manière à adresser le faisceau de mesure orthogonalement sur la surface de la pièce, et ledit dispositif comporte de plus un capteur optique, par exemple une caméra du type CCD, susceptible de déterminer la position de l'image d'un point lumineux du faisceau de mesure, réfléchi par la surface de la pièce, ledit point lumineux étant situé à une position de référence prédéfinie, et l'orientation dudit second miroir étant commandée de manière à ramener automatiquement la position de l'image du point lumineux, déterminée par le capteur optique, à ladite position de référence.

Grâce aux caractéristiques de ce second mode de réalisation, on est en mesure de réaliser, en plus de mesures par transmission, également des mesures par réflexion du faisceau de mesure, tout en remédiant aux problèmes de parallélisme précités et existant dans l'état de la technique, en raison de la collimation automatique obtenue par la commande dudit second miroir.

De façon avantageuse :

- l'orientation dudit second miroir est commandée par l'unité de commande recevant les mesures effectuées par ledit capteur optique ; et/ou

- ledit capteur optique est intégré dans l'interféromètre.

En outre, pour optimiser les traitements, on affine, avant chaque mesure d'une zone de mesure, l'orientation dudit second miroir à partir du traitement de franges d'interférence mesurées par l'interféromètre.

Par ailleurs, de façon avantageuse, le dispositif conforme à l'invention comporte une plaquette amovible, de dimensions au moins égales aux courses du support, montée sur le support et munie d'une pluralité d'éléments caractéristiques, par exemple des trous, dont les positions effectives sont connues et sont susceptibles d'être mesurées par l'interféromètre, les comparaisons respectivement entre les positions mesurées par l'interféromètre et les positions effectives connues de ces éléments caractéristiques permettant de déterminer la position relative exacte entre le support et le faisceau de mesure émis sur la pièce.

Les figures du dessin annexé feront bien comprendre comment l'invention peut être réalisée. Sur ces figures, des références identiques désignent des éléments semblables.

La figure 1 montre de façon schématique un dispositif pour déterminer la forme de la surface d'onde transmise par une pièce transparente, à partir de mesures interférométriques.

La figure 2 illustre schématiquement les caractéristiques essentielles du dispositif conforme à l'invention.

La figure 3 montre schématiquement un dispositif conforme à l'invention dans un mode de réalisation particulier permettant à la fois des mesures par transmission et des mesures par réflexion du faisceau de mesure.

La figure 4 montre schématiquement un autre mode de réalisation, avec un faisceau de mesure présentant un angle d'incidence non nul par rapport à la surface de la pièce à mesurer.

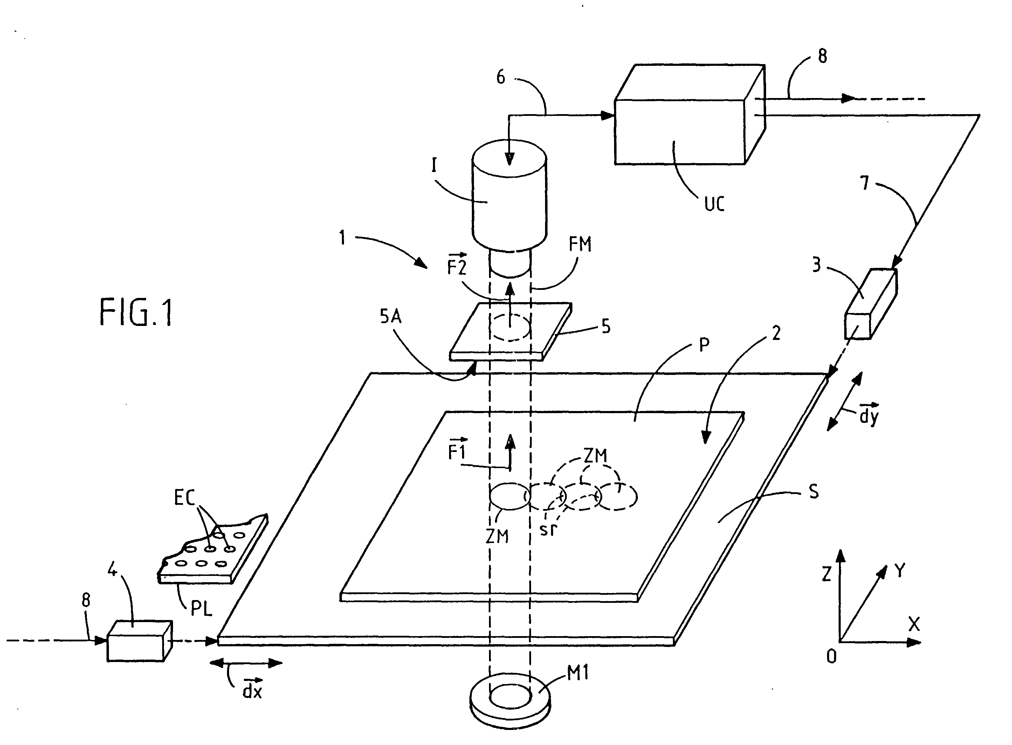

Le dispositif 1 conforme à l'invention et représenté sur la figure 1 est destiné à déterminer la forme de la surface d'onde non représentée et transmise par une pièce P transparente à faces sensiblement parallèles.

Plus précisément, ledit dispositif 1 est destiné à mesurer la hauteur "d'aspérités" et/ou de "dépressions" infimes non représentées de la surface d'onde dans la direction OZ orthogonale au plan OXY de la pièce P.

A cet effet, ledit dispositif 1 comporte, de façon connue :

- un support mobile S de forme générale plane, portant ladite pièce P et susceptible d'être déplacé dans le plan OXY par des moyens de déplacement 3 et 4, tel que précisé ci-dessous ;
- un interféromètre I, de type usuel, fixé à un support non représenté en regard d'une surface 2 de la pièce P, susceptible d'émettre un faisceau lumineux de mesure FM sur une zone de mesure ZM de ladite surface 2, et de mesurer les franges d'interférence créées par la surface d'onde dudit faisceau de mesure FM transmis (doublement comme explicité ci-dessous) par la pièce transparente P, tel qu'illustré par une flèche $\vec{F1}$, et la surface d'onde du faisceau de mesure FM réfléchi par la face 5A d'une lame de référence transparente 5 agencée sensiblement parallèlement à la surface 2 sur le trajet du faisceau de mesure FM, tel qu'illustré par une flèche $\vec{F2}$. Les franges d'interférence ainsi créées sont représentatives de la distance entre la face de réflexion 5A de la lame de référence 5 et la surface d'onde transmise ;

- lesdits moyens de déplacement 3 et 4, réalisés par exemple sous forme de vis et de moteur ou de courroie et de poulie crantée, susceptibles de déplacer le support S respectivement selon la direction OX, tel qu'illustré par une double flèche $\vec{dx}$, et selon la direction OY, tel qu'illustré par une double flèche $\vec{dy}$. Le déplacement du support S permet alors de réaliser au moyen de l'interféromètre I des mesures sur une pluralité de zones de mesure ZM (dont on a uniquement représenté quelques-unes sur la figure 1) recouvrant complètement ladite surface 2, chacune desdites zones de mesure ZM étant au moins partiellement recouverte sur un secteur de recouvrement sr par une zone de mesure adjacente. Les mesures réalisées sur lesdits secteurs de recouvrement sr permettent d'adapter entre elles les mesures réalisées sur les zones de mesure adjacentes correspondantes ; et
- une unité de commande UC commandant ledit interféromètre I, comme illustré par une liaison 6, et lesdits moyens de déplacement 3 et 4, comme illustré respectivement par des liaisons 7 et 8, et déterminant à partir des mesures effectuées par l'interféromètre I sur toutes lesdites zones de mesure ZM (et donc également sur les secteurs de recouvrement sr) la forme de la surface d'onde transmise par la pièce P.

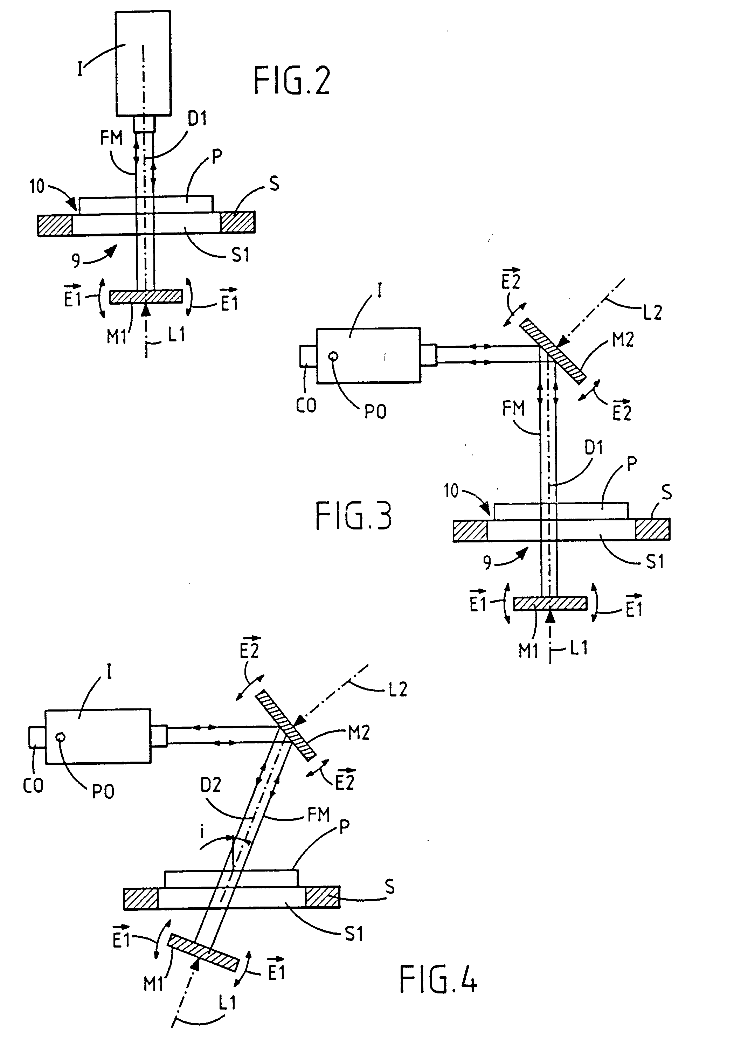

Selon l'invention, afin de pouvoir réaliser des mesures par transmission à travers ladite pièce transparente P, le dispositif 1 conforme à l'invention présente de plus les caractéristiques suivantes, tel que représenté sur la figure 2 :

- le support S est réalisé sur une partie S1 correspondant au moins à la partie portant la pièce P, de manière à laisser passer le faisceau lumineux de mesure FM, émis par l'interféromètre I et transmis par ladite pièce P qui est transparente ; et
- ledit dispositif 1 comporte de plus un miroir M1 orientable, comme indiqué par des flèches $\vec{E1}$, agencé en regard de la face 9 du support S opposée à celle 10 portant la pièce P et disposé sur le trajet du faisceau de mesure FM émis par l'interféromètre I et transmis selon une direction de transmission D1 par la pièce P et le support S, ledit miroir M1 étant agencé approximativement orthogonalement audit faisceau de mesure FM transmis et étant susceptible d'être orienté précisément de manière à renvoyer ledit faisceau FM exactement dans ladite direction de transmission D1, vers l'interféromètre I. La surface d'onde correspondante (illustrée par la flèche $\overrightarrow{F1}$ de la figure 1) est donc transmise deux fois par le support S et la pièce P et réfléchie une fois par le miroir M1.

Ainsi, grâce au renvoi du faisceau lumineux FM vers l'interféromètre I par le miroir M1, on peut réaliser les mesures interférométriques nécessaires à la mise en oeuvre de l'invention.

De plus, par l'orientation précise dudit miroir M1, on évite tout problème de défaut de parallélisme dans le dispositif 1, puisque les mouvements de la pièce P n'affectent pas la direction de propagation du faisceau lumineux FM qui la traverse.

Dans l'exemple représenté sur la figure 2, la direction de transmission D1 est orthogonale à la surface de la pièce P. Bien entendu, dans le cadre de l'invention, l'interféromètre I peut également être agencé de manière à obtenir une direction de transmission D1 non orthogonale à cette surface.

Le miroir M1, dont l'orientation est commandée au moyen d'une liaison L1 reliée par exemple à l'unité de commande UC (non représentée sur les figures 2 à 4), est de préférence motorisé, mais non automatisé, afin de pouvoir régler la collimation à distance, avant les mesures, sans pour autant perturber l'équilibre thermique du dispositif 1.

Dans le mode de réalisation représenté sur la figure 2, le dispositif 1 conforme à l'invention permet uniquement de réaliser des mesures par transmission du faisceau de mesure FM à travers la pièce P.

Sur la figure 3, on a représenté schématiquement un autre mode de réalisation permettant, en plus des mesures par transmission, également des mesures par réflexion du faisceau de mesure FM sur la pièce P (pour déterminer la forme de la surface d'onde réfléchie par ladite pièce P).

A cet effet, le dispositif conforme à l'invention comporte de plus :

- un miroir M2 orientable, comme indiqué par des flèches $\overrightarrow{E2}$, et agencé sur le trajet du faisceau de mesure FM entre l'interféromètre I (disposé de façon appropriée) et la pièce P de manière à adresser, par réflexion, ledit faisceau de mesure FM orthogonalement sur la surface 2 de ladite pièce P ; et
- un capteur optique CO intégré dans l'interféromètre I et susceptible de déterminer la position de l'image d'un point lumineux PO représenté schématiquement du faisceau de mesure FM, réfléchi par la surface 2 de la pièce P, ledit point lumineux PO étant situé à une position de référence prédéfinie, et l'orientation dudit miroir M2 étant commandée de manière à ramener automatiquement la position déterminée de l'image du point lumineux PO à ladite position de référence.

Le miroir M2 est commandé, de façon automatique, aux moments voulus précédents la mesure, comme indiqué par une liaison L2, à l'aide d'un moyen de commande, de préférence l'unité de commande UC, qui détermine en temps réel les ordres de commande dudit miroir M2, à partir des mesures réalisées par ledit capteur optique CO.

Ainsi, grâce à la commande automatique dudit miroir M2, on règle en temps utile de façon précise le parallélisme nécessaire à la mesure en réflexion d'une pièce P réfléchissante.

De préférence, on affine l'orientation dudit miroir M2 avant chaque mesure d'une zone de mesure ZM, à partir du traitement de franges d'interférence mesurées par l'interféromètre I.

Bien entendu, dans le cas d'une mesure en réflexion, le miroir M1 est inutilisé, puisque le faisceau de mesure FM ne traverse pas la pièce P.

Par conséquent, le dispositif de la figure 3 peut réaliser :

- soit des mesures en transmission, pour lesquelles le miroir M1 sert à ajuster la collimation et le miroir M2 à adresser le faisceau de mesure sur la pièce P ;
- soit des mesures en réflexion, pour lesquelles le miroir M2 réalise la collimation et le miroir M1 est inutilisé.

Dans un autre mode de réalisation représenté sur la figure 4, les miroirs M1 et M2 sont orientés de sorte que la direction D2 du faisceau de mesure entre le miroir M2 et la pièce P présente un angle d'incidence i non nul.

Ce mode de réalisation permet de réaliser des mesures sous incidence non normale, sans déplacer tout le dispositif 1.

Le dispositif 1 conforme à l'invention comporte de plus une plaquette PL amovible, représentée partiellement sur la figure 1, de dimensions au moins égales aux courses du support S. Cette plaquette PL qui est susceptible d'être montée sur le support S est munie d'une pluralité d'éléments caractéristiques EC, dont les positions effectives sont connues et sont susceptibles d'être mesurées par l'interféromètre I. Dans l'exemple représenté, lesdits éléments caractéristiques EC sont des trous, par exemple de diamètre 5 mm, qui sont écartés les uns des autres de 20 à 50 mm dans le plan de la plaquette PL. Les comparaisons respectivement entre les positions mesurées par l'interféromètre I et les positions effectives connues de ces éléments caractéristiques EC permettent de déterminer la position relative exacte entre le support S et le faisceau de mesure FM émis sur la pièce P.

## Revendications

1.  Dispositif pour déterminer la forme de la surface d'onde transmise par une pièce transparente (P) à faces sensiblement parallèles, ledit dispositif (1) comportant :

    -   un support (S) portant la pièce (P) ;
    -   un interféromètre (I) agencé en regard d'une surface (2) de la pièce (P), susceptible d'émettre un faisceau lumineux de mesure (FM) sur une zone de mesure (ZM) de ladite surface (2) et de mesurer les franges d'interférence créées par la surface d'onde dudit faisceau de mesure (FM) transmis par ladite pièce transparente (P) et la surface d'onde dudit faisceau de mesure (FM) réfléchi par une lame de référence (5) agencée sensiblement parallèlement à ladite surface (2) de la pièce (P), sur le trajet dudit faisceau de mesure (FM) ;
    -   des moyens de déplacement (3, 4) permettant d'engendrer par leur action le balayage dudit faisceau de mesure (FM) sur la surface (2) de la pièce (P) de manière à permettre audit interféromètre (I) de réaliser des mesures sur une pluralité de zones de mesure (ZM) recouvrant complètement ladite surface (2), chacune desdites zones de mesure (ZM) étant au moins partiellement recouverte sur un secteur de recouvrement (sr) par une zone de mesure adjacente ; et
    -   une unité de commande (UC) commandant ledit interféromètre (I) et lesdits moyens de déplacement (3, 4) et déterminant, à partir des mesures effectuées par ledit interféromètre (I) sur toutes les zones de mesure (ZM), la forme de ladite surface d'onde transmise par la pièce (P), les mesures effectuées sur les secteurs de recouvrement (sr) étant utilisées pour adapter entre elles les mesures réalisées sur les zones de mesure (ZM) adjacentes correspondantes,

    **caractérisé en ce que** ledit support (S) est réalisé, au moins sur sa partie portant ladite pièce (P), de manière à laisser passer le faisceau lumineux de mesure (FM) émis par l'interféromètre (I) et transmis par ladite pièce (P) qui est transparente, et en ce que ledit dispositif (1) comporte de plus un premier miroir orientable (M1), qui est agencé du côté opposé à l'interféromètre (I) par rapport au support (S) et à la pièce (P) et qui est disposé sur le trajet du faisceau de mesure (FM) émis par l'interféromètre (I) et transmis selon une direction de transmission (D1, D2) par la pièce (P) et le support (S), ledit premier miroir (M1) étant agencé approximativement orthogonalement audit faisceau de mesure (FM) transmis et étant orienté de manière à renvoyer ledit faisceau de mesure (FM) dans ladite direction de transmission (D1, D2).

2.  Dispositif selon la revendication 1, **caractérisé en ce que** l'orientation dudit premier miroir (M1) est commandée par ladite unité de commande (UC).

3.  Dispositif selon l'une des revendications 1 ou 2, **caractérisé en ce qu'**il comporte un second miroir (M2) orientable et agencé sur le trajet du faisceau de mesure (FM) entre l'interféromètre (I) et la pièce (P) de manière à adresser à ladite pièce (P), par réflexion, le faisceau de mesure (FM) émis par ledit interféromètre (I).

4.  Dispositif selon la revendication 3, **caractérisé en ce que** ledit second miroir (M2) est agencé de manière à adresser le faisceau de mesure (FM) de façon inclinée par rapport à la surface (S) de la pièce (P).

5.  Dispositif selon la revendication 3, **caractérisé en ce que** ledit second miroir (M2) est agencé de manière à adresser le faisceau de mesure (FM) orthogonalement sur la surface (2) de la pièce (P), et en ce que ledit dispositif (1) comporte de plus un capteur optique (CO) susceptible de déterminer la position de l'image d'un point lumineux (PO) du faisceau de mesure, réfléchi par la surface (2) de la pièce (P), ledit point lumineux (PO) étant situé à une position de référence prédéfinie, et l'orientation dudit second miroir (M2) étant commandée de manière à ramener automatiquement la position de l'image du point lumineux (PO), déterminée par ledit capteur optique (CO), à ladite position de référence.

6.  Dispositif selon la revendication 5, **caractérisé en ce que** l'orientation dudit second miroir (M2) est commandée par l'unité de commande (UC) recevant les mesures effectuées par ledit capteur optique (CO).

7.  Dispositif selon l'une des revendications 5 ou 6, **caractérisé en ce que** ledit capteur optique (CO) est intégré dans l'interféromètre (I).

8.  Dispositif selon l'une quelconque des revendications 3 à 7, **caractérisé en ce qu'**avant chaque mesure d'une zone de mesure (ZM), on affine l'orientation dudit second miroir (M2), à partir du traitement de franges d'interférence mesurées par l'interféromètre (I).

**9.** Dispositif selon l'une quelconque des revendications précédentes,
**caractérisé en ce qu'**il comporte une plaquette amovible (PL), de dimensions au moins égales aux courses du support (S), montée sur le support (S) et munie d'une pluralité d'éléments caractéristiques (EC), dont les positions effectives sont connues et sont susceptibles d'être mesurées par l'interféromètre (I), les comparaisons respectivement entre les positions mesurées par l'interféromètre (I) et les positions effectives connues de ces éléments caractéristiques (EC) permettant de déterminer la position relative entre le support (S) et le faisceau de mesure (FM) émis sur la pièce (P).

**10.** Dispositif selon la revendication 9,
**caractérisé en ce que** lesdits éléments caractéristiques (EC) sont des trous pratiqués dans la plaquette (PL).

**Claims**

**1.** Device for determining the shape of the wave surface transmitted by a substantially parallel-faced transparent component (P), the said device (1) including:

- a support (S) bearing the component (P)
- an interferometer (1) arranged opposite a surface (2) of the component (P), capable of emitting a measurement light beam (FM) onto a measurement area (ZM) of the said surface (2) and of measuring the interference fringes created by the wave surface of the said measurement beam (FM) transmitted by the said transparent component (P) and the wave surface of the said measurement beam (FM) reflected by a reference plate (5) arranged so as to be substantially parallel to the said surface (2) of the component (P) over the path of the said measurement beam (FM);
- movement means (3, 4) enabling, by their action, the said measurement beam (FM) to be scanned over the surface (2) of the component (P) so as to enable the said interferometer (I) to take measurements on a number of measurement areas (ZM) completely covering the said surface (2), each of the said measurement areas (ZM) being at least partially overlapped, over an overlap sector (sr), by an adjacent measurement area; and
- a control unit (UC) which controls the said interferometer (I) and the said movement means (3, 4) and determines, from the measurements taken by the said interferometer (I) on all the measurement areas (ZM), the shape of the said wave surface transmitted by the component (P), the measurements taken on the overlap sectors (sr) being used to fit together the measurements taken on the corresponding adjacent measurement areas (ZM),

**characterized in that** the said support (S) is made, at least on its part bearing the said component (P), in such a way as to let the measurement light beam (FM) emitted by the interferometer (I) and transmitted by the said transparent component (P) pass through it, and in that the said device (1) additionally includes a first swivelling mirror (M1) which is arranged on the side opposite the interferometer (I) with respect to the support (S) and to the component (P) and which is placed in the path of the measurement beam (FM) emitted by the interferometer (I) and transmitted along a transmission direction (D1, D2) by the component (P) and the support (S), the said first mirror (M1) being arranged approximately orthogonally to the said transmitted measurement beam (FM) and being oriented in such a way as to send the said measurement beam (FM) back in the said transmission direction (D1, D2).

**2.** Device according to Claim 1,
**characterized in that** the orientation of the said first mirror (M1) is controlled by the said control unit (UC).

**3.** Device according to either of Claims 1 and 2,
**characterized in that** it includes a second swivelling mirror (M2), which is arranged in the path of the measurement beam (FM) between the interferometer (I) and the component (P) in such a way as to direct the measurement beam (FM) emitted by the said interferometer (I), by reflection, to the said component (P).

**4.** Device according to Claim 3,
**characterized in that** the said second mirror (M2) is arranged in such a way as to direct the measurement beam (FM) in an inclined manner with respect to the surface (S) of the component (P).

**5.** Device according to Claim 3,
**characterized in that** the said second mirror (M2) is arranged in such a way as to direct the measurement beam (FM) orthogonally onto the surface (2) of the component (P), and in that the said device (1) additionally includes an optical sensor (CO) capable of determining the position of the image of a light point (PO) of the measurement beam, reflected by the surface (2) of the component (P), the said light point (PO) being located at a predefined reference position and the orientation of the said second mirror (M2) being controlled in such a way as to bring the position of the image of the light point (PO), determined by the said optical sensor (CO), back to the said reference position automatically.

6. Device according to Claim 5,
**characterized in that** the orientation of the said second mirror (M2) is controlled by the control unit (UC) which receives the measurements taken by the said optical sensor (CO).

7. Device according to either of Claims 5 and 6,
**characterized in that** the said optical sensor (CO) is integrated into the interferometer (I).

8. Device according to any one of Claims 3 to 7,
**characterized in that**, before each measurement of a measurement area (ZM), the orientation of the said second mirror (M2) is refined on the basis of the processing of interference fringes measured by the interferometer (I).

9. Device according to any one of the preceding claims,
**characterized in that** it includes a removable plate (PL), having dimensions at least equal to the amounts of travel of the support (S), mounted on the support (S) and provided with a number of characteristic elements (EC), the effective positions of which are known and are capable of being measured by the interferometer (I), the comparisons respectively between the positions measured by the interferometer (I) and the known effective positions of these characteristic elements (EC) making it possible to determine the relative position between the support (S) and the measurement beam (FM) emitted onto the component (P).

10. Device according to Claim 9,
**characterized in that** the said characteristic elements (EC) are holes made in the removable plate (PL).

**Patentansprüche**

1. Vorrichtung zum Ermitteln der Form der Wellenfront, die von einem transparenten Teil (P) mit im Wesentlichen parallelen Flächen transmittiert wird, wobei die Vorrichtung (1) aufweist:

    - einen Träger (S), der das Teil (P) trägt;
    - ein gegenüber einer Oberfläche (2) des Teils (P) angeordnetes Interferometer (I), das fähig ist, ein Messlichtstrahlungsbündel (FM) auf eine Messzone (ZM) der Oberfläche (2) abzustrahlen und die Interferenzmuster zu messen, die von der Wellenfront des vom transparenten Teil (P) transmittierten Messstrahlungsbündels (FM) und der Wellenfront des von einem Bezugsplättchen (5) reflektierten Messstrahlungsbündels (FM) erzeugt werden, das im Wesentlichen parallel zur Oberfläche (2) des Teils (P) auf dem Weg des Messstrahlungsbündels (FM) angeordnet ist;
    - Verschiebungsmittel (3, 4), die durch ihre Tätigkeit gestatten, das Abtasten des Messstrahlungsbündels (FM) an der Oberfläche (2) des Teils (P) zu bewirken, um dem Interferometer (I) zu gestatten, Messungen an einer Vielzahl von Messzonen (ZM) durchzuführen, die die Oberfläche (2) vollständig abdecken, wobei jede der Messzonen (ZM) von einer benachbarten Messzone wenigstens teilweise in einem Überlappungsbereich (sr) überlappt wird; und
    - eine Steuerungseinheit (UC), die das Interferometer (I) und die Verschiebungsmittel (3, 4) steuert und ausgehend von Messungen, die vom Interferometer (I) an allen Messzonen (ZM) durchgeführt werden, die Form der vom Teil (P) transmittierten Wellenfront ermittelt, wobei die an den Überlappungsbereichen (sr) durchgeführten Messungen dazu verwendet werden, die an den entsprechenden benachbarten Messzonen (ZM) durchgeführten Messungen untereinander anzupassen,

**dadurch gekennzeichnet, dass** der Träger (S) wenigstens in dem Abschnitt, der das Teil (P) trägt, so ausgeführt ist, dass er das Messlichtstrahlungsbündel (FM) durchgehen lässt, der vom Interferometer (I) abgestrahlt und vom Teil (P), das transparent ist, transmittiert wird und dass die Vorrichtung (1) außerdem einen ersten einstellbaren Spiegel (M1) aufweist, der auf der in Bezug auf den Träger (S) und das Teil (P) dem Interferometer (I) entgegengesetzten Seite angeordnet ist und der auf dem Weg des Messstrahlungsbündels (FM) angeordnet ist, das vom Interferometer (I) abgestrahlt und entsprechend einer Transmissionsrichtung (D1, D2) von dem Teil (P) und dem Träger (S) transmittiert wird, wobei der erste Spiegel (M1) zum transmittierten Messstrahlungsbündel (FM) annähernd rechtwinklig angeordnet ist und so eingestellt wird, dass er das Messstrahlungsbündel (FM) in der Transmissionsrichtung (D1, D2) zurückstrahlt.

2. Vorrichtung nach Anspruch 1,
**dadurch gekennzeichnet, dass** das Einstellen des ersten Spiegels (M1) von der Steuerungseinheit (UC) gesteuert wird.

3. Vorrichtung nach einem der Ansprüche 1 oder 2,
**dadurch gekennzeichnet, dass** sie einen zweiten Spiegel. (M2) aufweist, der einstellbar und auf dem Weg des Messstrahlungsbündels (FM) zwischen dem Interferometer (I) und dem Teil (P) angeordnet ist, um das vom Interferometer (I) abgestrahlte Messstrahlungsbündel (FM) durch Reflexion auf das Teil (P) zu richten.

**4.** Vorrichtung nach Anspruch 3,
**dadurch gekennzeichnet, dass** der zweite Spiegel (M2) so angeordnet ist, dass er das Messstrahlungsbündel (FM) geneigt in Bezug auf die Oberfläche (S) des Teils (P) richtet.

**5.** Vorrichtung nach Anspruch 3,
**dadurch gekennzeichnet, dass** der zweite Spiegel (M2) so angeordnet ist, dass er das Messstrahlungsbündel (FM) rechtwinklig auf die Oberfläche (2) des Teils (P) richtet, und dass die Vorrichtung (1) außerdem einen optischen Sensor (CO) aufweist, der fähig ist, die Position der Abbildung eines Lichtpunktes (PO) des Messstrahlungsbündels zu ermitteln, das von der Oberfläche (2) des Teils (P) reflektiert wird, wobei sich der Lichtpunkt (PO) in einer vorher definierten Bezugsposition befindet und die Einstellung des zweiten Spiegels (M2) so gesteuert wird, dass die Position der Abbildung des Lichtpunktes (PO), die vom optischen Sensor (CO) ermittelt wird, automatisch zur Bezugsposition zurückgebracht wird.

**6.** Vorrichtung nach Anspruch 5,
**dadurch gekennzeichnet, dass** die Einstellung des zweiten Spiegels (M2) von der Steuerungseinheit (UC) gesteuert wird, die die vom optischen Sensor (CO) durchgeführten Messungen empfängt.

**7.** Vorrichtung nach einem der Ansprüche 5 oder 6,
**dadurch gekennzeichnet, dass** der optische Sensor (CO) in das Interferometer (I) integriert ist.

**8.** Vorrichtung nach einem der Ansprüche 3 bis 7,
**dadurch gekennzeichnet, dass** vor jeder Messung einer Messzone (ZM) die Einstellung des zweiten Spiegels (M2), ausgehend von der Verarbeitung des mit dem Interferometer (I) gemessenen Interferenzmusters, verfeinert wird.

**9.** Vorrichtung nach einem der vorhergehenden Ansprüche,
**dadurch gekennzeichnet, dass** sie ein abnehmbares Plättchen (PL) mit Abmessungen aufweist, die wenigstens gleich den Verschiebewegen des Trägers (S) sind, wobei das Plättchen am Träger (S) angebracht und mit einer Vielzahl von charakteristischen Elementen (EC) versehen ist, deren tatsächliche Positionen bekannt sind und mit dem Interferometer (I) gemessen werden können, wobei die jeweiligen Vergleiche zwischen den mit dem Interferometer (I) gemessenen Positionen und den bekannten, tatsächlichen Positionen dieser charakteristischen Elemente (EC) gestatten, die genaue relative Position zwischen dem Träger (S) und dem auf das Teil (P) abgestrahlten Messstrahlungsbündel (FM) zu ermitteln.

**10.** Vorrichtung nach Anspruch 9,
**dadurch gekennzeichnet, dass** die charakteristischen Elemente (EC) Löcher sind, die in das Plättchen (PL) gebohrt wurden.

FIG.1

EP 0 818 667 B1

FIG.2

FIG.3

FIG.4